# EUROPEAN PATENT SPECIFICATION

(11) **EP 3 074 978 B1**
(45) Date of publication and mention of the grant of the patent: **16.09.2020**
(21) Application number: 14803122.2
(22) Date of filing: 26.11.2014
(51) Int. Cl.: G11B 27/10, H04N 21/418, H04N 21/482, G06F 16/48

(54) **INTERACTIVE MEDIA SYSTEM**
INTERAKTIVES MEDIA SYSTEM
SYSTÈME MEDIA INTERACTIVE

(30) Priority: 26.11.2013 US 201361909174 P
(43) Date of publication of application: 05.10.2016
(73) Proprietor: Muuselabs NV, 1000 Brussel (BE)
(72) Inventor: MARESCAUX, Théodore, B-1000 Brussels (BE); PIRICOVA, Maria, 01004 Zilina-Zavodie (SK); BELKIN, Danny, Singapore 276952 (SG); PALMERS, Pieter, B-3060 Bertem (BE); MOFFAT, William, B-3070 Kortenberg (BE)
(74) Representative: IP HILLS NV
(86) International application number: PCT/EP2014/075689
(87) International publication number: WO 2015/078923

(56) References cited:
- EP-A1- 1 507 262
- EP-A1- 1 840 898
- GB-A- 2 350 742
- US-A1- 2009 234 472
- US-B1- 6 717 507

## Description

### FIELD

The present disclosure generally relates to media players, such as audio and video media players. More particularly, the present disclosure relates to an interactive media system.

### BACKGROUND

Conventional media players, such as MP3 players and digital video recorders, have a user interface that enables a user to locate and select a media file a user wishes to play. The user interface is displayed on a display of the media player and often includes text and images to help a user locate and select a media file the user wishes to play. Users of conventional media players are often required to read the text and images displayed on the display of the media player and to navigate through multiple menus, using, for example, a click wheel or navigation buttons, to locate a particular media file the user wishes to play. Conventional media players are unsuitable for use by elderly people, disabled people, and children because these users often have difficulty reading (or are unable to read), and often lack the fine motor skills required to perform fine motor tasks, such as scrolling a click wheel or pushing on navigation buttons, to locate and select media files these users wish to play.

EP 1 840 898 A1 describes techniques for using media keys that have been created for media data and which can be used to access the media data for which the media key has been created. A media key has machine readable information associated with it that may be used to access the media data corresponding to the media key. Also, various operations may be performed using the accessed media data.

US 6717507 B1 describes RF tags configured to access and/or control electronic media. The tags have a memory programmed to access a particular media source when polled by a RF transceiver connected with (preferably integrated with) a media player. The memory of the tags may also be programmed with control parameters, such as volume or language, or, the memory may register the place in the playback of the media when that tag is removed from the RF field so that the playback is resumed from that place when the tag again enters the RF field.

US 2009/0234472 A1 describes a media token with a pushbutton RFID tag which, when activated by a button press, enables a globally unique identifier encoded (GUID) in the tag to be read by an RFID reader that is operatively coupled to a client device. The GUID is resolved by an on-line media content service which identifies media content that is associated with the media token. The service streams the content to the client device or delivers it for local storage which is rendered by the client device. An association is created between the media token and the rendered content, however, the media token itself does not function as a content container, but instead provides a convenient way to control content playback while functioning as a physical vehicle that can be packed, touched, and shared much like traditional media.

EP 1507262 A1 describes an information stream (media stream) that can be bookmarked with event markers to note points in time in the information stream of occurrences of interesting events, wherein repeat occurrences of an event are noted with the same event marker.

GB 2350742 A describes an interactive video system and a method for controlling an interactive video system by limiting the disruption to the flow of the video picture and the soundtrack when a user interacts with the video display.

Improvements in media players are therefore desirable.

### SUMMARY

According to one aspect of an embodiment, an interactive media system is provided. The system includes a set of anchors in which each anchor in the set is associated with an interactive audio/video composition. Each anchor in the set includes an anchor identifier device that includes an anchor identifier. The system also includes an anchor sensor configured to: detect the anchor identifier device of one anchor; read the anchor identifier device of the detected anchor to obtain the unique anchor identifier from the detected anchor identifier device; and transmit the unique anchor identifier. The system also includes a media player configured to: receive the unique anchor identifier from the sensor; identify one or more playlists associated with the unique anchor identifier, the one or more playlists comprising media files and forming the interactive audio/video composition; obtain the one or more playlists; and play the media files of the one or more playlists; wherein the media player is configured to play the media files of the one or more playlists further based on a state of the interactive audio/video composition being played back; and wherein the state of the interactive audio/video composition depends on at least on one of: the number of times an anchor from the set of anchors has been detected, the previously detected anchors, the previously removed anchors, and, other anchors concurrently detected with the detected anchor.

According to another aspect of an embodiment, an interactive media system is provided. The interactive media system includes a set of anchors in which each anchor in the set of anchors represents a command for controlling a media player device. Each anchor in the set of anchors also includes an anchor identifier device that includes a unique anchor identifier. The interactive media system also includes a sensor configured to: detect the anchor identifier device of one anchor; read the anchor identifier device of the one detected anchor to obtain the unique anchor identifier from the one detected anchor identifier device; and transmit the unique anchor identifier. The interactive media system also includes a media player device configured to: receive the unique anchor identifier from the anchor sensor; identify a command that is associated with the unique anchor identifier, the command being an action for controlling the media player device; obtain the command; and execute the command.

### BRIEF DESCRIPTION OF THE DRAWINGS

Embodiments of the present invention will be described, by way of example, with reference to the drawings and to the following description, in which:
FIG. 1 is a block diagram of an interactive media player system in accordance with an embodiment of the present disclosure.
FIG. 2 is a perspective view of the interactive media player system of FIG. 1.
FIG. 3 is a block diagram of an interactive media system in accordance with another embodiment of the present disclosure, in which the interactive media player system uses an encrypted unique anchor identifier.
FIG. 4 shows, in accordance with the present disclosure, a lookup table that can be stored in a database.
FIG. 5 is a perspective view of an interactive media system in accordance with another embodiment of the present disclosure, in which a user can place, on an anchor sensor, an anchor that represents a character in a story and/or an anchor that represents a physical object in the story.
FIG. 6 is a perspective view of an interactive media system in accordance with another embodiment of the present disclosure, in which the interactive media player system has an anchor shaped as a cello and an anchor shaped as a drum.
FIG. 7 shows, in accordance with the present disclosure, an example of another lookup table that can be stored in a database.
FIG. 8 is a block diagram of an interactive media player system in accordance with another embodiment of the present disclosure.
FIG. 9 is a block diagram of another yet another embodiment of an interactive media player system of the present disclosure.
FIG. 10 shows, in accordance with an embodiment of present disclosure, an example of a state-machine that can be used in lieu of a look-up table to control the logic of the media player system in the context of an interactive story.
FIG. 11 shows, in accordance with the present disclosure, an example of a state-machine that can be used in lieu of a look-up table to control the logic of the media player system in the context of an iterative music mixing application.

### DETAILED DESCRIPTION

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an interactive media system for individuals that are unable to read and/or that lack fine motor skills to perform fine motor tasks to facilitate operation of the media player system. The present disclosure also relates to an interactive media system that is very easy for all users to operate.

In the context of the present disclosure, elements can be said to be operationally connected to each other when, for example, a signal present in one element can be communicated to another element. Further, elements can be said to be operationally connected when an action in, or state of, one element can be controlled by, or related to, an action in, or a state of, another element.

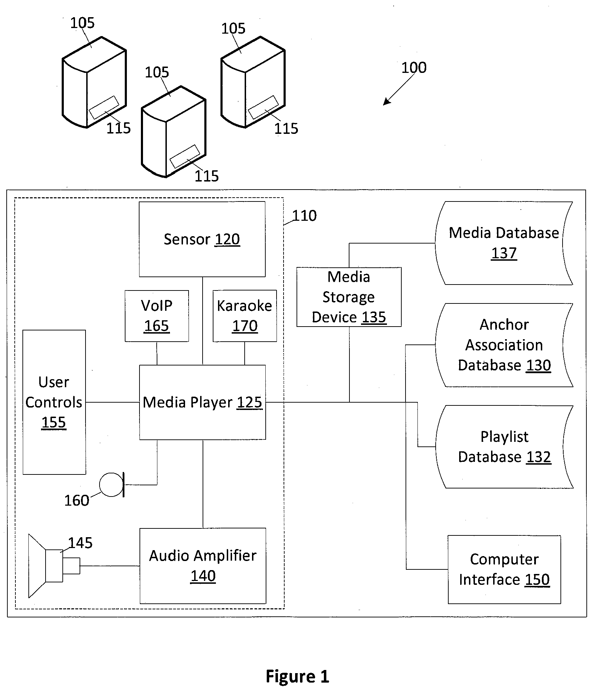

FIG. 1 shows a block diagram of an embodiment of an interactive media system in accordance with an example embodiment of the present disclosure. The interactive media system 100 includes a set of distinct anchors 105 and a media player device 110. Each anchor 105 has an anchor identifier device 115 that is mounted on a surface of the anchor 105 or embedded within the anchor 105. Each anchor identifier device 115 stores a unique anchor identifier that uniquely identifies the anchor 105. The anchor identifier device 115 may be, for example, a near-field radio identification device, such as a radio-frequency identification (RFID) tag, or an optical identification device, such as a two-dimensional barcode (i.e., a quick response (QR) code), or a steganographically encoded identification embedded onto an image printed on an anchor 105.

Each unique anchor identifier is a number that includes a predetermined number and a universally unique identifier (UUID). The predetermined number of the anchor identifier device 115 may be, for example, a unique static number or the serial number of a respective anchor 105. Optionally, each unique anchor identifier number may be encrypted. That is, each unique anchor may be cryptographically signed, with for example, a single key, a public key, or a private key, to authenticate the unique anchor identifier associated with an anchor 105. In an embodiment, each unique anchor may be cryptographically signed with a private key of a Root Private Key of the Root Signing Device.

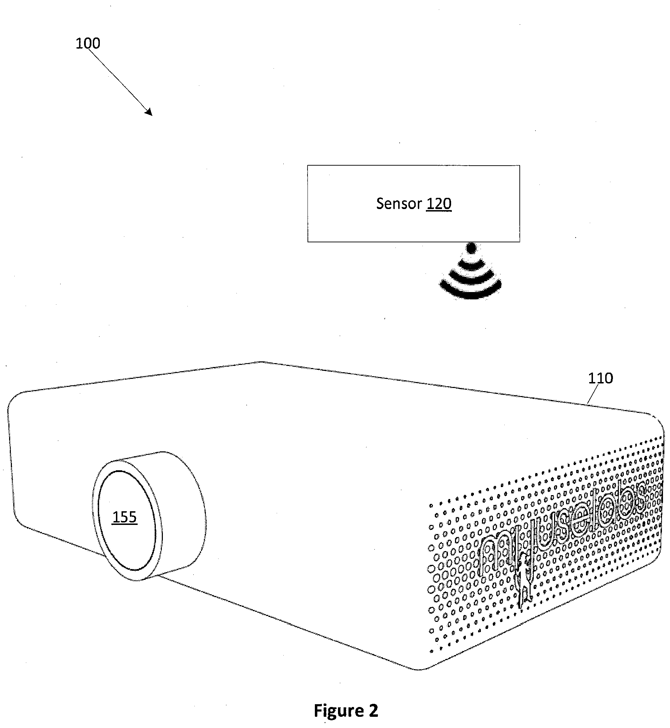

The media player device 110 also includes an anchor sensor 120 that detects an anchor identifier device 115 using short-range range wireless or optical communications. The anchor sensor 120 is embedded into the media player device 110 and detects the presence of one or more anchors 105 when one or more anchors 105 are in physical contact with the anchor sensor 120, or when the one or more anchors 105 are held in close proximity to the media player device 110, for example less than 10cm from the media player device 110, such that the anchor sensor 120 detects and reads the anchor identifier device 115 of the anchor 105 using short-range wireless communications. Although the anchor sensor 120 is shown in FIG. 1 to be embedded into the media player device 110, in an alternative embodiment, the anchor sensor 120 may be a separate device that is spaced from the media player device 110 and operationally connected thereto to provide one or more unique anchor identifiers to the media player device 110 when the anchor sensor 120 detects the presence of one or more anchor identification devices 115. In the alternative embodiment in which the anchor sensor 120 is a separate device, the anchor sensor 120 may be powered by a battery (not shown) and may be wirelessly connected to the media player device 110 using a dedicated wireless channel to transmit, to the media player device 110, each unique anchor identifier read by the anchor sensor 120. FIG. 2 shows such an embodiment.

The media player device 110 also includes a media player 125 that is operationally connected to the anchor sensor 120. The media player 125 is an embedded computer chip that is suitable for media decoding, playing and for controlling the media player device 110. The media player 125 can also decrypt a unique anchor identifier received from the anchor sensor 120 as further described below.

The media player device 110 also includes an anchor association database 130 that is operationally connected to the media player 125. The anchor association database 130 stores a look-up table that includes entries that associate the unique anchor identifier for each distinct anchor 105 with a media file of an ensemble of media files. The ensemble of media files forms an interactive audio/video composition, such as, for example, an interactive story or an interactive music composition.

In an alternative embodiment, the look-up table may include entries that associate the unique anchor identifier for each distinct anchor 105 with a metadata file of an ensemble of metadata files. Each metadata file includes a list of references to one or more media files and a list of actions for controlling the playback of the one or more media files. In this embodiment, the anchors 105 may be utilized to dynamically control the order in which the media files of an interactive audio/video composition are played, as described in further detail below.

For the purposes of the present disclosure, an ensemble of media files or an ensemble of metadata files are referred to herein as a playlist. Although a playlist is described as having multiple media files or multiple metadata files, a playlist may include only one media file, or one metadata file, which forms an interactive audio/video composition. In the embodiments shown in FIG. 1, the playlist is stored in a playlist database 132, which is operationally connected to the media player 125. Although a playlist is described as including an ensemble of media files, a playlist may include only one media file that forms an interactive audio/video composition.

The media player device 110 also includes a media storage device 135 that is operationally connected to the media player 125. The media storage device 135 stores media files. The media storage device 130 is any suitable storage device, such as, for example, a random access memory or a hard disk drive. The media files are stored in a media database 137 and include, for example, audio files, video files, and image files (i.e., files that represent digital photos).

The media player device 110 also includes an audio amplifier 140, a speaker 145, a computer interface 150, and user controls 155. Optionally, the media player device 110 includes a microphone 160. The audio amplifier 140 is operationally connected to the media player 125 and receives audio media files from the media player 125, processes the audio media files, and amplifies the audio media files. The speaker 145 receives the processed and amplified audio media files from the amplifier 140 and generates the audio sounds of the audio media file.

The computer interface 150 is operationally connected to the media player 125. In the embodiment shown in FIG. 1, the media player 125 executes media management software. The computer interface 150 communicates with the media management software to enable a user to load audio media files onto the media player device 110 for storage in the media database 137 of the media storage device 135, to manage the audio media files stored on the media storage device 135, and to create playlists that form an interactive story using the audio media files stored on the media storage device 135. The computer interface 150 can wirelessly connect to any suitable electronic device that has software installed and running thereon and enables a user to use the media management software to configure the media player device 110 using, for example, a user interface that is accessible through a web browser running on the electronic device. Examples of suitable electronic devices are desktop computers, smart phones, laptop computers, and tablets.

In an embodiment, the media management software executed by the media player 125 includes a voice over Internet protocol (VoIP) application 165 to VoIP and/or a karaoke application 170.

The user controls 155 are operationally connected to the media player 125 and include buttons, such as, for example, a power on/off button for turning the media player device 110 on and off, a previous button and a next button for controlling the position in a given playlist, and a volume button for controlling the volume of the media player device 110.

The operation of the media player system will now be described in relation to FIG. 1. When a user places one anchor 105 from the set of anchors 105 on or near the media player device 110, the anchor sensor 120 detects the anchor identifier device 115 of the anchor 105, reads the unique anchor identifier stored in the anchor identifier device 115, and provides the unique anchor identifier to the media player 125. The media player 125 accesses the anchor association database 130 and determines which media file is associated with the unique anchor identifier received from the sensor 120. The media player 125 then accesses the media storage device 135 to retrieve the audio media file associated with the determined unique anchor identifier, and plays the audio media file using the amplifier 140 and the speaker 145.

In another embodiment, the playlist and set of media-files is replaced by a list of entry points (pointers) into a single large media-file and such single large media-file. The unique identifier maps to any suitable control structure, such as, for example an object, a structure of pointers, a table of control structures, a linked-list of control structures. Different handles in this control structure refer to a given large media file stored in the media storage device 135, to a position within this media-file, to a length (or and end point in the media file), and to other types of metadata, such as for example, the number of repetitions of this portion of the media file, the mode in which the media file is to be played (e.g. digital filtering to remove voice audio for when the media player device 110 is in karaoke mode, or state information for instance pertaining to interactive gaming).

In the embodiment the media player software includes a VoIP application, an anchor 105 may be used to launch the VoIP application. In this embodiment, the anchor identifier device 115 stores a unique anchor identifier that indicates that a user of the interactive media system 100 wishes to launch the VoIP application. When the anchor identification device 115 of the anchor 105 is detected by the anchor sensor 120 of the media player device 110, the media player 125 receives the unique anchor identifier from the anchor sensor 120, accesses the lookup table stored in the anchor association database 13- and determines that the received unique anchor identifier is associated with VoIP application. The media player 125, using the media management software, then launches the VoIP application. When a user places a VoIP call using the media management software of the media player 125, the VoIP call is placed to the appropriate destination. The microphone 160 is used to record the sound sent over the VoIP call and the speaker 145 renders the audio coming from the other side of the VoIP call. In an embodiment, the unique anchor identifier includes a UUID that is used by the media player 125 to retrieve the appropriate VoIP credentials stored in the anchor association database 130. In another embodiment, the unique anchor identifier includes the VoIP credentials.

In the embodiment the media player software includes a karaoke application, an anchor 105 may be used to trigger the karaoke application. In this embodiment, the anchor identifier device 115 stores a unique anchor identifier that is associated with launching the karaoke application. When the anchor identification device 115 of the anchor 105 is detected by the anchor sensor 120 of the media player device 110, the media player 125 receives the unique anchor identifier from the anchor sensor 120, accesses the lookup table stored in the anchor association database and determines that the received unique anchor identifier is associated with the karaoke application. The media player 125, using the lookup table stored in the anchor association database 130, determines that unique anchor identifier is associated with a karaoke application. The media player 125, using the media management software, then launches the VoIP application. In this embodiment, each of the remaining anchors 105 of the set of anchors 105 is associated with an audio file. That is, each unique anchor identifier identifies an audio file stored in the media storage device 135. When the anchor identifier device 115 is detected by the anchor sensor 120 after the karaoke application is launched, the anchor sensor 120 reads the unique anchor identifier from the anchor identifier device 115 and transmits the unique anchor identifier to the media player 125. The media player 125 receives the unique anchor identifier and determines, using the lookup table stored in the anchor association database 130, the audio file associated with the received unique anchor identifier. The media player 125 then retrieves the audio file from the media storage device 135 and plays the audio file using the amplifier 140 and the speaker 145. The media player 125 may attenuate the voice tracks of the audio file through digital filtering to obtain the instrument tracks of the audio file. The media player 125 may then mix the sounds of a user's signing received via the microphone 160 with the obtained instrumental tracks and output the mixed sound and instrument tracks using the amplifier 140 and the speaker 145.

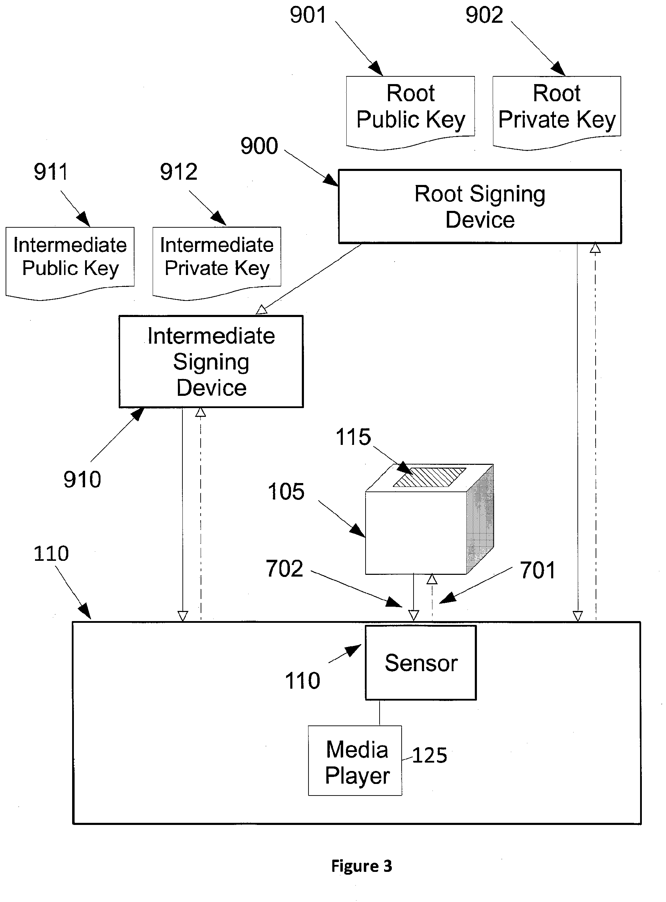

FIG. 3 shows an embodiment of the present disclosure in which the unique anchor identifier is encrypted. In the present embodiment, when the unique anchor identifier is encrypted, the media player 125 receives the encrypted unique anchor identifier 115 from the anchor sensor 120 and decrypts the unique anchor identifier to obtain the predetermined known number and the UUID. The media player 125 then authenticates the predetermined known number. For example, when the unique anchor identifier 115 is cryptographically signed with a Root Private Key 902 of a Root Signing Device 900, the unique anchor identifier 115 is successfully authenticated when the unique static number or the serial number of the of the unique anchor identifier is successfully retrieved using the Root Public Key 901.

Alternatively, when the unique anchor identifier is cryptographically signed with an intermediate private key 912 of an intermediate signing device 910, the unique anchor identifier 115 is successfully authenticated when the predetermined number of the unique anchor identifier is successfully retrieved using the intermediate public key 911 and when the Intermediate Signing Device 910 authenticates the unique anchor identifier 115 using a signature with the Root Private Key 902. In this embodiment, the media server 125 successfully authenticates the unique anchor identifier because the signed certificate chain of the intermediate signing device 910 is trusted by the Root Signing Device 900.

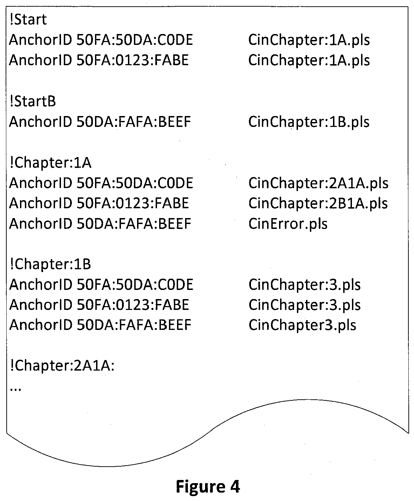

In the embodiment shown in FIG. 1, the set of distinct anchors 105 are associated with an interactive story, in which one anchor 105 (start story anchor) indicates that a user wishes to start an interactive story, and the remaining anchors 105 represent either a unique character or a unique physical object of the interactive story. Optionally, the set of anchors may include one anchor 105 (end story anchor) which indicates that a user wishes to end the interactive story. The remaining anchors 105 may also be used as different entry points in the interactive story. In the anchor association database 130, the look up table includes entries that associate the unique anchor identifier for the start story anchor with a playlist for the interactive story. An example of a lookup table stored in the anchor association database 130 for this embodiment of the present disclosure is shown in FIG. 4. The ensemble of interactive media files (i.e., the playlist), indicates which audio media files are associated with the interactive story. In an embodiment, the look up table also associates a unique anchor identifier for each anchor 105 that represents a character or physical object in the interactive story with one audio media file from the playlist.

Multiple anchors 105 of the set of anchors 105 may be concurrently placed on or near the media player device 110. The anchor sensor 120 detects the anchor identification devices 115 of all anchors 105 that are placed on or near the media player device 110, reads the unique anchor identifiers from all the detected anchor identification devices 115 detected, and transmits all the unique anchor identifies to the media player 125. The media player 125 may use the combination of unique anchor identifiers to determine the state of the interactive story and an action to be taken, such as, for example, to play a certain media file, or to perform a given action such as changing a state of the interactive story.

In an alternative embodiment, a single anchor 105 of the set of anchors 105 may be associated with an ensemble of audio files. When the anchor sensor 120 detects the anchor identification device 115 of the single anchor 105, the anchor sensor 120 reads the unique anchor identifier from the anchor identification device 115 of the single anchor 105 and transmits the unique anchor identifier to the media player 125. The media player 125 may select one or more audio files based on the state of the interactive story. The state of the interactive story may depend on, for example, a number of times the anchor 105 has been detected by the anchor sensor 120 during the interactive story, which other anchors 105 have been previously detected by the anchor sensor 120, and which anchors 105 are currently being detected by the anchor sensor 105.

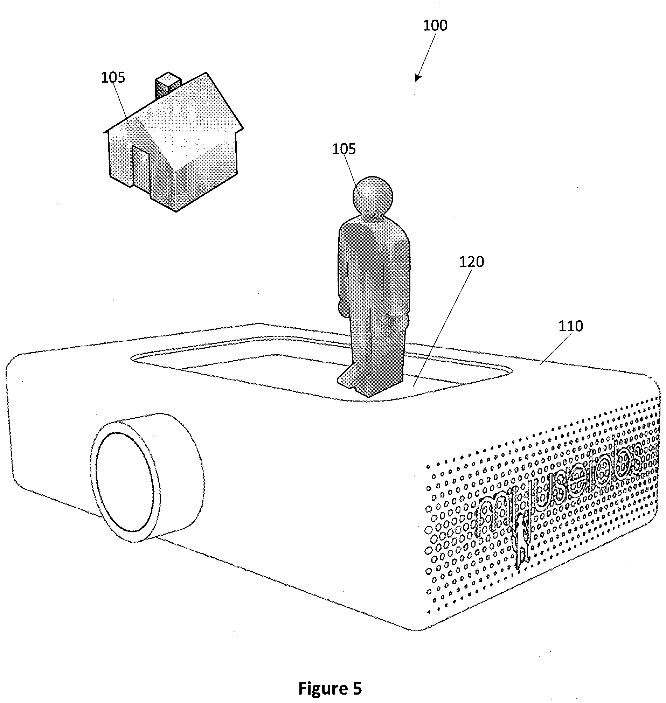

For example, when a user places the start story anchor 105 on or near the media player device 110, the sensor 120 detects the anchor identification device 115 of the start story anchor 105, reads the unique anchor identifier stored in the anchor identification device 115, and provides the unique anchor identifier to the media player 125. The media player 125 accesses the anchor association database 130 and determines that the unique anchor identifier is associated with a playlist and thus begins the interactive story. FIG. 5 shows an embodiment in which a user can place one of the anchors 105 that represents a character 500 (in this example a person) or a physical object (in this example, a house) in the story on or near the media player device 110. The anchor sensor 120 detects the anchor identification device 115 of the anchor 105, reads the unique anchor identifier stored in the anchor identification device 115, and provides the unique anchor identifier to the media player 125. The media player 125 accesses the anchor association database 130 and the state of the story to determine which audio media file in the ensemble of media files associated with the unique anchor identifier is to be played. The media player 125 accesses the media storage device 135, retrieves the audio media file in the playlist is associated with the unique anchor identifier, and plays the audio file using the amplifier 140 and the speaker 145. The above steps repeat each time an anchor sensor 120 detects an anchor (or a plurality of anchors) on or near the media player device 110.

In an embodiment, the audio media associated with an anchor 105 that represents a character or physical objected in the story may include a question that prompts a user to select one or multiple anchors 105 from the set of anchors 105 that is related to the interactive story and place the selected anchor on or near the media player device 110. Depending on which anchor or anchors 105 is/are selected and placed on or near the media player device 110, a different audio media file from the playlist (i.e., the interactive story) is played by the media player device 110, which enables a user to choose the way in which the story continues, or which question comes next.

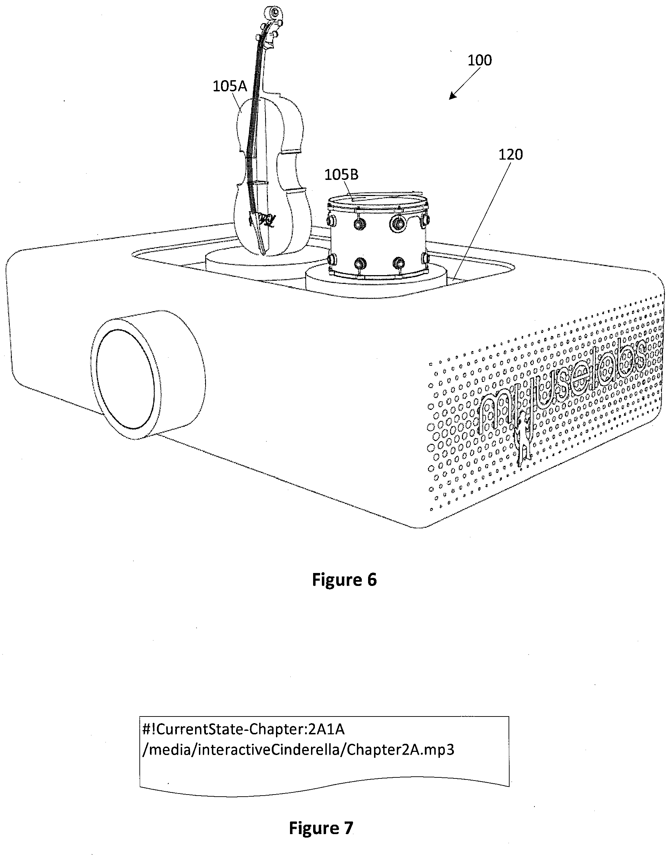

In an alternative embodiment of the present disclosure, the media player system 100 may be used to interactively compose and mix music tracks. In this embodiment, each distinct anchor 105 is associated with a music loop, or an ensemble of music loops, and each music loop or ensemble of music loops is provided by one audio media file. Each anchor 105 may be shaped and dimensioned to look like a musical instrument for a music loop. For example, when the anchor 105 is shaped and dimensioned to look like a drum, the anchor is associated with one or several drum loops. Alternatively, when the anchor 105 is shaped and dimensioned to look like a cello, the anchor is associated with an ensemble of cello loops. FIG. 6 shows an embodiment of 100 media player system 100 that has an anchor 105A shaped as a cello and an anchor 105B shaped as a drum.

Referring again to FIG. 1, the media storage device 135 stores the audio media files for the music loops that are associated with the anchors 105. The anchor database 130 stores a lookup table that associates each unique anchor identifier with one of the media files such that each music loop is associated with one unique anchor identifier. An example of the lookup table stored in the anchor association database 130 for this embodiment of the present disclosure is shown in FIG. 7.

When an anchor 105 that is associated with, for example, a drum loop, is selected from the set of anchors and placed on or near the media player device 110, the anchor sensor 120 detects the anchor identifier device 115 that is mounted on a surface of the anchor 105 or embedded within the anchor 105, reads the unique anchor identifier stored in the anchor identifier device 115, and transmits the unique anchor identifier to the media player 125. The media player 125 accesses the anchor association database 130 and determines that a unique anchor identifier is associated with an ensemble of drum loop audio files. Depending on the state of the music mix application (i.e., for example, the number of times a given anchor 105 has been previously detected, the combination of anchors 105 currently being detected, the combination of anchors 105 recently removed), the media player 125 retrieves the appropriate drum loop audio file from the media storage device 135, and repeatedly plays the drum loop audio file using the amplifier 140 and the speaker 145.

When another anchor 105 that is associated with, for example, a bass guitar loop, is selected from the set of anchors and placed on or near the media player device 110, the sensor 120 detects the anchor identifier device 115 that is mounted on a surface of the anchor 105 or embedded within the anchor 105, reads the unique anchor identifier stored in the anchor identifier device 115, and transmits the unique anchor identifier to the media player 125. The media player 125 accesses the anchor association database 130 and determines that a unique anchor identifier is associated with an ensemble of bass guitar loop audio files. Depending on the state of the music mix application, the media player 125 retrieves the appropriate bass guitar loop audio file from the media storage device 135, mixes together the bass guitar loop audio file with the drum loop audio file and plays the mixed bass guitar and drum loops using the amplifier 140 and the speaker 145. The bass guitar and drum music loops are automatically synchronized by the media player 125 by starting the bass guitar loop media file when the drum loop media file has reached a synchronization point, and vice versa. Placing the anchor 105 that represents the bass guitar on or near the media player device 110 may stop the bass guitar music loop. Similarly, placing the anchor 105 that represents the drum on or near the media player device 110 may stop the drum music loop.

In an alternative embodiment, in the media player system 110, an anchor identification device may store a unique identifier that is associated with a command for mixing music loops. In this embodiment, the lookup table stored in the anchor association database 130 may include the following entries regarding drums, bass, and synthesizer loops:
AnchorlDxxx #m.drums:ElectroMix123.mix
AnchorlDyyy #m.bass: ElectroMix123.mix
AnchorlDzzz #m:sythn.ElectroMix123.mix

The right hand side of the entries regarding drums, bass, and synthesizer loops shown above include interactive mix commands, in which the command #m informs the media player 125 to toggle the music loop in the audio media file, ElectroMix123.mix. When an anchor 105 that includes an anchor identifier device 115 that stores the unique anchor identifier AnchorIDxxx is placed on or near the media player device 110, the sensor 120 detects the anchor identifier device 115, reads the unique anchor identifier AnchorIDxxx from the anchor identifier device 115, and transmits the unique anchor identifier to the media player 125. The media player 125 accesses the anchor association database 130, determines that the unique anchor identifier AnchorIDxxx is associated with an audio media file for a drum music loop. The media player 125 then retrieves the audio media file for the drums music loop from the media storage device 135 and plays the drums music loop using the amplifier 140 and the speaker 145.

In another embodiment the sensor 120 may determine a distance between the anchor identifier device 115 and the sensor 120 based on the strength of the short-range wireless signal received from the anchor identifier 115 of an anchor. The sensor 120 may transmit data indicating the distance between the sensor 120 and the anchor identifier device 115 to the media player 125, and the media player 125 may perform fade-ins and fade-outs based on the distance between the anchor identifier 115 and the sensor 120. For example, as a user moves an anchor 105 towards the media player device 110, the strength of the short-range wireless or optical signal between the anchor identifier 115 and the sensor 120 increases, which indicates that the distance between the anchor identifier 115 and the sensor 120 is decreasing. The media player 125 receives this data from the sensor 120 and performs a fade-in. As a user moves an anchor 105 away from the media player device 110, the strength of the short-range wireless or optical signal between the anchor identifier 115 and the sensor 120 decreases, which indicates that the distance between the anchor identifier 115 and the sensor 120 is increasing. The media player 125 receives this data from the sensor 120 and performs a fade-out.

In another embodiment, when an anchor 105 is placed on the media player device 110, the sensor 120 may determine that the short-range wireless signal between the anchor identifier 115 and the sensor 120 is strong, which indicates that the distance between the anchor identifier device 115 and the sensor 120 is minimized. The sensor 120 transmits this data to the media player 125, which sets the volume for the speaker 145 of the media player device 110 to a maximum. When the anchor 105 is moved away from the media player device 110, the media player 125 reduces the volume for the speaker 145 of the media player device 110.

In another embodiment, when an anchor 105 is placed on the media player device 110, the anchor sensor 120 determines that the short-range wireless signal between the anchor identifier 115 and the anchor sensor 120 is strong, which indicates that the distance between the anchor identifier device 115 and the anchor sensor 120 is minimized. The anchor sensor 120 transmits this data to the media player 125, which sets the tempo for the music loop associated to the anchor 105 to a maximum. When the anchor 105 is moved away from the media player device 110, the media player 125 reduces the tempo for the music loop associated to the anchor 105.

In an alternative embodiment of the present disclosure, the unique anchor identifier that identifies each anchor 105 in the set of anchors 105 may identify a command for controlling the media player device 110. For example, the set of anchors 105 may include an anchor for performing a fast-forward command, an anchor for performing a rewind command, an anchor for performing a shuffle command, an anchor for performing a repeat command, an anchor to start an application such as, for example, the karaoke application, or the VoIP application of the media management software. A person of ordinary skill in the art will recognize that any suitable command for controlling the operation of the media device, or starting any application of the media management software, may be associated with an anchor 105 in the set of anchors 105. In this embodiment, the look up table stored in the anchor association database 130 associates each unique anchor identifier with one command for controlling the operation of media player device. Thus, for example, when a user places an anchor 105 that is associated with performing a shuffle command from the set of anchors 105 on or near the media player device 110, the sensor 120 detects the anchor identification device 115 of the anchor 105, reads the unique anchor identifier from the anchor identification device 115, and provides the unique anchor identifier to the media player 125. The media player 125 accesses the anchor association data 130, determines that the unique anchor identifier is associated with a shuffle command, and performs a shuffle command.

In the embodiment in which the unique anchor identifier that identifies each anchor 105 in the set of anchors 105 identifies a command for controlling the media player device 110, the media player device 110 may not include an anchor association database that stores a lookup table, but rather the media player 125 of the media player device 110 may implement a state machine in which each state is associated with a command or action for controlling the media player device 110. The state machine changes states based on which unique anchor identifier(s) are received from the anchor identifier device(s) 115, which anchor identifier device(s) 115 have been detected but are no longer present, the number of times a unique anchor identifier of a given anchor identifier device 115 or the unique anchor identifiers of set of anchor identifier devices 115 are received by the media player device 110.

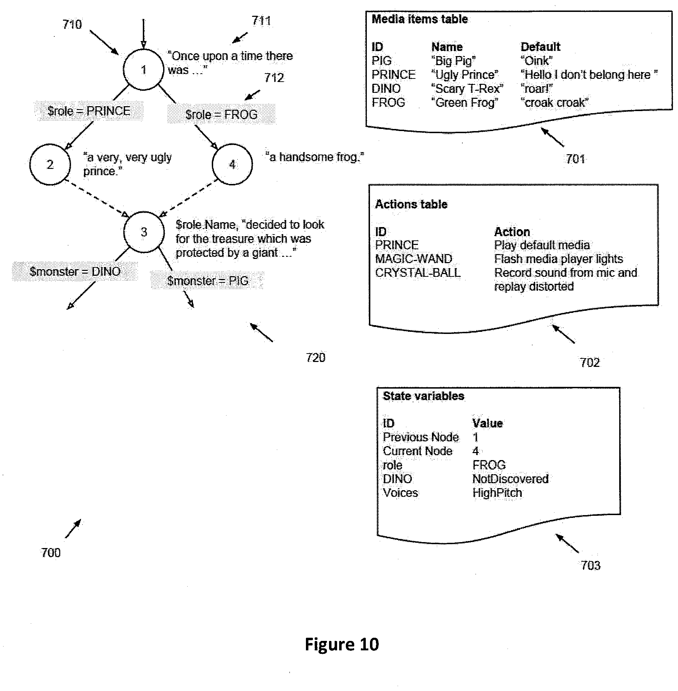

Referring to FIG. 10, the state machine 700 is part of a computer program, comprising a graph of nodes 720, a starting node in the graph, a collection of state variables 703, an ensemble of media player actions 702 and an ensemble of media items 701. A node 710 is a computer data structure that has references to an ensemble of media items 711 (a sub-ensemble of the state machine media items), an ensemble of media player actions (such as, for example, shuffle, karaoke mode, ...), an ensemble of pointers to the next valid nodes 712 in the graph and node variables. The node variables, in combination with the state machine state variables may affect which media item is played next, or which media player action is performed, or which node in the graph will be traversed next. Traversing from one node to another on the state machine may either occur automatically, for instance when the media file has finished playing, or based on user input, when an anchor 105 has been placed, or upon an action on the user controls 155. Upon a node transition, state variables, global to the state machine or local to the nodes, may be set.

The state machine 700 may be used for the implementation of interactive stories. Every anchor 105 associated to the interactive story affects one or multiple variables in the state machine 700 and/or in one or several nodes. Every anchor 105 associated to the interactive story has a set of default actions, or a set of default media-files that are played whenever the anchor 105 is placed on the anchor sensor 120, even if the anchor 105 does not affect variables in the current active node. This way the media player device 110 remains responsive to user actions.

The state machine pertaining to a given interactive story has an ensemble of default actions or an ensemble of default media files, so that every anchor 115 that is not associated with the current interactive story may also trigger a response from the device 100. Referring to FIG 10, the starting node is 1. The media player plays the media file associated to the node to output through the speaker 145 the phrase 'Once upon a time there was...'. The user then places an anchor 115 representing a frog. The media player 125 then transitions accordingly to node 4 in the graph 720. Accordingly, the state machine variable $role is set to "FROG" and the media player 125 outputs the phrase "a handsome frog". Automatically the state machine transitions to node 3 in the graph 720. The media player 125 constructs the sequence of audio samples to play by resolving the $role variable to being FROG in the state variables 703. This in turn resolves in the audio media "Green Frog" in the media items table 701. As a result the media player 125 outputs 'Green Frog decided to look for the treasure which was protected by a giant...'. It then proceeds to wait on a user input. In the graph 720 the next valid anchors 115 would be DINO or PIG. If the user places an unexpected anchor, such as PRINCE, the media player 125 looks up the associated default action in the action table 702. In this example it resolves to playing the default media file associated to the PRINCE anchor. A lookup in table 701 resolves for the media player 125 to output 'Hello, I don't belong here' through the speaker 145. Actions may have conditions attached, in which case they are only carried out if the condition evaluates to true. For instance the media player 125 will evaluate the state variables of the state machine with conditions such as "IF $monster == DINO AND $role = PRINCE" to determine what action or node transition comes next.

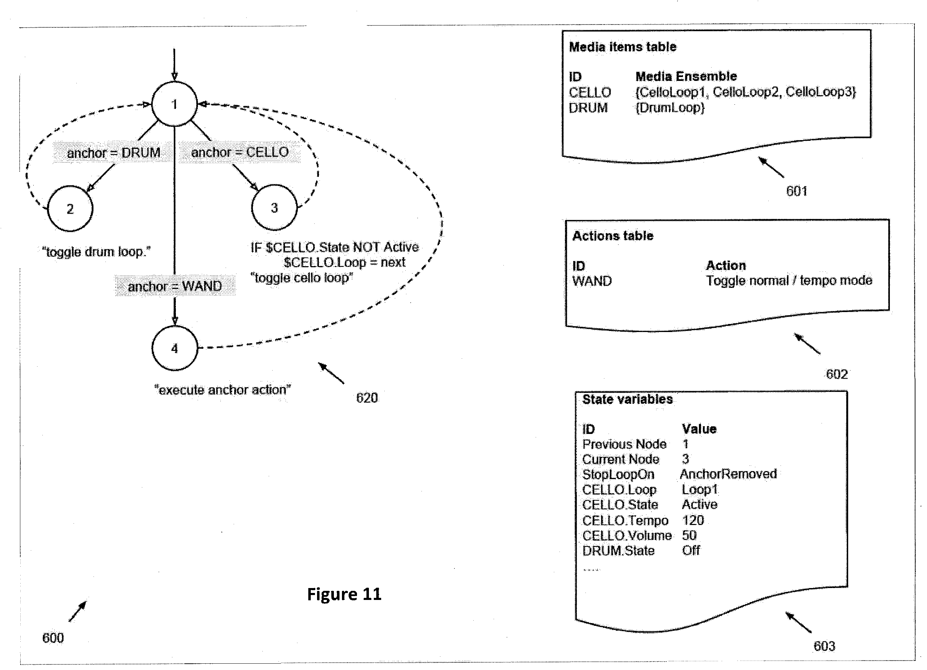

Figure 11 shows an example embodiment of a state machine 600 controlling a music mixing application. When a user places the CELLO anchor on the anchor sensor 120, the media player 125 proceeds to node 3 in the graph 620. The media player 125 looks up the variable $CELLO.State in the State Variables table 603. The media player 125 determines that the cello is currently inactive, updates the $CELLO.State variable to Active, and proceeds to playing CelloLoop1 (i.e., the first instance of the media ensemble associated to CELLO in the media items table 601). The music loop only stops when the CELLO anchor is removed and is placed again on the anchor sensor 120. In another embodiment, it is possible to change this behaviour when the state variable $StopLoopOn equates "AnchorRemoved". In this case, the music loop is stopped (fades-out) as soon as the CELLO anchor is no longer detected on the anchor sensor 120. Once the CELLO has been stopped, if the CELLO anchor is detected anew, the media player 125 proceeds to node 3 again. This time the logical condition 'IF $CELLO.State NOT Active' is true, so the media player 125, selects CelloLoop2 as the next media file in the ensemble of media-files associated to the CELLO anchor in table 601.

Special anchors can trigger an action or a change of state on the media player 125 in place of playing out a media-file. For example, if the spacial anchor WAND is placed on the anchor sensor 120, the media server 125 proceeds to node 4 in the graph 620 and looks up the action associated with this anchor in the actions table 602. In this example, the WAND anchor modifies the state of the media player 125 to treat further sensing of anchors, such as CELLO or WAND, as instrument tempo. When a user now brings the CELLO closer by the anchor sensor 120, the tempo of the CELLO loop (if active) will accelerate as a function of the distance between anchor and anchor sensor.

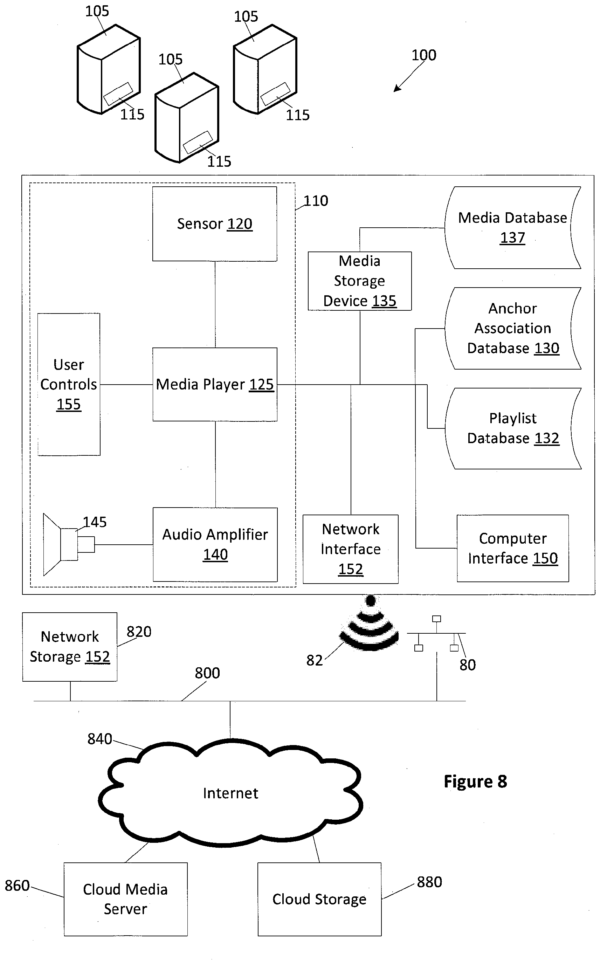

FIG. 8 shows a block diagram of another embodiment of a media player system in accordance with the present disclosure. The media player system 100 includes a set of distinct anchors 105 and a media player device 110. The set of anchors 105 are similar to the anchors described with respect to the embodiment of FIG. 1 and are therefore not described in further detail. Also, the anchor sensor 120, the media player 125, the amplifier 140, the speaker 145, and the computer interface 150 of the media player device 110 are similar to those elements described with respect to the embodiment of FIG. 1 and are therefore not described in further detail.

In the embodiment shown in FIG. 8, the media player device 110 includes a network interface 152 that uses a wireless connection 82 or a wired connection 80 to connect to a network storage device 820 on a local network 800. The network storage device 820 may store media files such as, for example, audio files, video files, and image files (i.e., files that represent digital photographs) and video media files associated with an interactive story, a music loop, or an ensemble of music loops. The network interface 152 may use the wireless connection 82 or the wired connection 80 to connect to a cloud media server 860 and a cloud storage device 880, via the Internet 840, to stream audio and/or video files associated with an interactive story or a music loop.

In the embodiment shown in FIG. 8, when an anchor 105 is placed on or near the media player device 110, the anchor sensor 120 detects the anchor identification device 115 of the anchor sensor 120 and reads the anchor identification device 115 to obtain the unique anchor identifier of the anchor 100. The anchor sensor 120 also transmits the unique anchor identifier to the media storage device 135 of the media player device 110. When the unique anchor identifier is encrypted, the media player 125 decrypts the unique anchor identifier as described above with respect to the description of FIG. 3 and obtains the predetermined known number and the UUID of the unique anchor identifier. After the predetermined known number is authenticated, the media player 125 accesses the anchor association database 130 using the UUID to retrieve a media file associated with the UUID. When, the UUID of the decrypted unique anchor identifier is not present in the anchor association database 130, the UUID may be a uniform resource locator (URL), or part of an URL. When the UUID is a URL or part of a URL, the media player 125 accesses the cloud media server 860 or the cloud storage device 880, using the network interface 152, to check whether additional information, such as, for example, media updates, software updates or add-ons, or a playlist, is available for the media player device 110 to download. Because the UUID has been authenticated, different types of digital data can be securely streamed or retrieved from the cloud devices 860 and 880, such as for example, media, association files, ensembles of media files (i.e., playlists, application software such as interactive stories or music mixing and in general software updates and configuration files of the device 100. The device may backup its configuration, and local databases to the cloud storage 880 for later retrieval.

Referring again to FIG. 8, the anchor sensor 120 may be used as a medium to transmit configuration data to and from the media player device 110 to facilitate the configuration of the network interface 152, the wireless connection 82 and/or the wired connection 80. Any suitable electronic device, such as for example, a mobile phone, or tablet equipped with a compatible wireless technology to the anchor sensor 120, may be used to communicate with the media player 110. For example, a mobile phone may use its RFID/NFC interface to communicate the credentials to the local WiFi network to the media player device 110 to appropriately configure the wireless connection 82. These credentials are typically stored on a mobile phone and can be set by the user in a mobile phone application related to the media management software running on the media player 125.

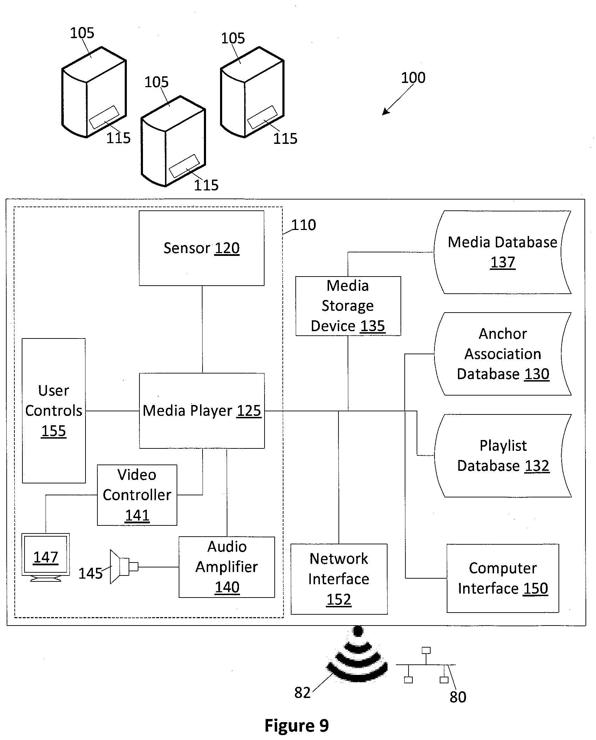

FIG. 9 shows a block diagram of another embodiment of a media player system in accordance with the present disclosure. The media player system 100 includes a set of distinct anchors 105 and a media player device 110. The set of anchors 105 are similar to the anchors described with respect to the embodiment of FIG. 1 and are therefore not described in further detail. Also, the anchor sensor 120, the media player 125, the amplifier 140, the speaker 145, and the computer interface 150 of the media player device 110 are similar to those elements described with respect to the embodiment of FIG. 1 and are therefore not described in further detail.

In the embodiment shown in FIG. 9, the media player device 110 includes a video controller 141 and a display 147, which need not be integrated within the same housing as other components of the media player device 110. The lookup table stored in the anchor association database 130 includes some unique anchor identifiers that are associated with video files of the ensemble of media files (i.e., the playlist) that form the interactive story. The media storage device 130 stores video files in addition to audio media files.

Referring to FIG. 9, when an anchor 105 with an anchor identification device 115 that stores a unique anchor identifier that is associated with a video file or multiple video files of the ensemble of media files that form the interactive story is placed on or near the sensor 120, the anchor sensor 120 detects the anchor identification device 115, reads the unique anchor identifier, and provides the unique anchor identifier to the media player 125. The media player 125 accesses the anchor association database 130 and determines that a unique anchor identifier is associated with a video file or multiple files, and retrieves the video file(s) from the media storage device 135. The media player 125 then provides the video file(s) to the video controller 141, which processes and renders the video file(s) using the display 147.

Alternatively, in the embodiment shown in FIG. 9, the lookup table stored in the anchor association database 130 may include some unique anchor identifiers that are associated with an ensemble of image files that represent digital photos. The ensemble of image files represents a digital photo album. The media storage device 130 stores each image file from the ensemble of image files.

Referring again to FIG. 9, when an anchor 105 with an anchor identification device 115 that stores a unique anchor identifier that is associated with an image file or multiple image files of the ensemble of media files that form the interactive story is placed on or near the sensor 120, the anchor sensor 120 detects the anchor identification device 115, reads the unique anchor identifier, and provides the unique anchor identifier to the media player 125. The media player 125 accesses the anchor association database 130 and determines that a unique anchor identifier is associated with an image file or multiple image files, and retrieves the image file(s) from the media storage device 135. The media player 125 then provides the image file(s) to the video controller 141, which processes and renders the image file(s) using the display 147.

In an alternative embodiment, when multiple anchors 105 are placed on or near the anchor sensor 120, the media player 125 looks up the ensemble of image files (i.e., the playlist of image files) associated with the detected anchors 105 in the anchor association database 135 and creates a combined playlist by selecting image files in each of the composing playlists and adding them to the combined playlist. The image files of different ensembles of image files (i.e., playlists of image files) may be combined into a new ensemble of image files (i.e., a new playlist), either randomly, or according to a pre-defined rule (e.g. as sorted by date or event). A media player configuration provides a default rule but the presence of special anchors 105 on or near the anchor sensor 120 that overrides the default association stored in the lookup table in the anchor association database 130 in order to select the rule that has been associated with the special anchor 105.

In an alternative embodiment, the metadata file associated with a unique identifier may also include instructions to control external electronic devices, such as for example, tablets, smartphones or television screens. This synchronizes the playing of an audio or video file on the media player device 110 with the playing of an audio, video, or image file on the external electronic device. The media player device 110 transmits a message, via the network interface 152, to the external electronic device(s) using short-range wireless communications, such as, for example, near-field communications. The data includes information related to an audio file to be output by the external electronic device, or the video or image file to be rendered on a display of the external electronic device. For example, the media player 125 of the media player device 110 synchronizes the display of photographs on an external electronic device with plashing of music on the media player device 110 in response to the detection of anchors 105 by the anchor sensor 120.

In another embodiment, when some of the anchor identifier devices 115 are RFID tags, the unique anchor identifiers for these anchor identifier devices 115 include a UUID and media data. When the anchor sensor 120 detects the RFID tag of one of the anchors, the anchor sensor 120 transmits the UUID and the media data to the media player 125. The media player 125 directly streams the media from the RFID tag for play back on the amplifier 140 and the speaker 145 of the media player device 110. Alternatively, the media player 125 may retrieve the media data from the RFID tag, using for example, the anchor sensor 120, and stores the media data in the media storage device 135 as a media for play back. The media player 125 also creates an entry in the lookup table stored in the anchor association database 130 that associates the UUID in the tag with the media file stored in the media storage device 130.

In an alternative embodiment, media data may be stored in the RFID tag of an anchor 105 using the anchor sensor 120 of the media player device 110, or an external electronic device, such as a smartphone or tablet utilizing short-range wireless communications such as NFC.

In an alternative embodiment, media data received from an RFID tag of an anchor 105 may be mixed with an interactive audio/video composition. For example, when the interactive composition is an interactive story, sounds such as bird sounds can be mixed into the interactive story even though this was not originally include in the playlist for the interactive story.

Advantageously, the media player system of the present disclosure is easy to operate for all individuals, and particularly easy for children, elderly individuals, and disabled individuals who are unable to read and/or lack fine motor skills to operate.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

## Claims

1. An interactive media system (100), comprising:
a set of anchors (105), each anchor in the set of anchors being associated with an interactive audio/video composition, and, each anchor comprising an anchor identifier device (115) that includes an anchor identifier; and
an anchor sensor (120) configured to:
detect the anchor identifier device (115) of one anchor (105);
read the anchor identifier device (115) of the detected anchor (105) to obtain the unique anchor identifier from the detected anchor identifier device; and
transmit the unique anchor identifier; and
a media player (125) configured to:
receive the unique anchor identifier from the anchor sensor (120);
identify one or more playlists associated with the unique anchor identifier the one or more playlists comprising media files and forming the interactive audio/video composition;
obtain the one or more playlists; and
play the media files of the one or more playlists;
**CHARACTERIZED IN THAT**,
the media player (125) is configured to play the media files of the one or more playlists further based on a state of the interactive audio/video composition being played back, and wherein the state of the interactive audio/video composition depends on at least one of: the number of times an anchor from the set of anchors has been detected, the previously detected anchors, the previously removed anchors, and, other anchors being concurrently detected with the detected anchor (105).

2. The interactive media system of claim 1, wherein the interactive audio/video composition is one of:
an interactive story wherein each anchor in the set of anchors represents a character or a physical object in the interactive story; and
an interactive music composition wherein each anchor in the set of anchors represents a musical instrument.

3. The interactive media system of claim 1, wherein:
each unique anchor identifier is encrypted and wherein the media player is further configured to, in response to receipt of the unique anchor identifier from the anchor sensor, decrypt the encrypted unique anchor identifier; and
preferably, each anchor identifier is encrypted with a single key, a public key, or a private key.

4. The interactive media system of claim 1, wherein:
each unique anchor identifier comprises a predetermined number, preferably an encrypted predetermined number, and a universally unique identifier (UUID); and,
when the predetermined number is an encrypted predetermined number, the media player is further configured to, in response to receipt of the unique anchor identifier from the anchor sensor, decrypt and authenticate the encrypted predetermined number, and identify the one or more playlists that are associated with the unique anchor identifier using the UUID.

5. The interactive media system of claim 1, wherein each anchor identifier device is a unique radio frequency identifier tag, the unique anchor identifier is a unique radio frequency identifier, and the anchor sensor is configured to read the unique radio frequency identifier tag using near field radio communication to obtain the unique radio frequency identifier, each radio frequency identifier tag preferably storing an audio playlist that is associated with the unique radio frequency identifier.

6. The interactive media system of claim 1, wherein the unique anchor identifier device is an optical code associated with the anchor and wherein the anchor sensor is configured to detect and obtain the optical code using optical communication, the optical code preferably being one of a bar code and a quick response (QR) code.

7. The interactive media system of claim 1, further comprising a media player device, wherein the anchor sensor and the media player are integrated into the media player device, the media player device preferably including a storage device.

8. The interactive media system of claim 1, further comprising a media player device, wherein:
the anchor sensor is physically separated from the media player device and operationally connected to the media player device using one of a wireless connection and a wired connection; and
preferably,
the interactive media system comprises a storage device;
the media player is further configured to obtain the one or more playlists associated with the identified playlist from the storage device;
the storage device is one of a networked storage device and a cloud-based storage device.

9. The interactive media system of claim 2, wherein the playlist is an audio media file, and wherein during play of the audio media by media player, a user is prompted to place another anchor from the set of anchors on or near the media player system.

10. The interactive media system of claim 2, wherein:
one of the anchors in the set of anchors is a start story anchor, and wherein the unique anchor identifier for the start story anchor is associated with a state for commencing the interactive story; and
preferably, one of the anchors in the set of anchors is an end story anchor, and wherein the unique anchor identifier for the end story anchor is associated with a state for ending the interactive story.

11. The interactive media system of claim 1, wherein:
the anchor sensor is further configured to detect the anchor using short-range wireless signal, determine a distance between the anchor identifier device and the anchor sensor based on the signal strength of the short-range wireless signal, and to provide the distance to the media player, and
preferably, the media player controls the play of the media files based on the distance received from the anchor sensor.

12. The interactive media system of claim 11, wherein, when the media player is playing the one or more playlists and when the media player controls the play of the one or more playlists based on the distance received from the anchor sensor, the media player performs a fade-in when the distance received from the anchor sensor is decreasing and performs a fade-out when the distance received from the anchor sensor is increasing.

## Patentansprüche

1. Interaktives Mediensystem (100), umfassend:
einen Ankersatz (105), wobei jeder Anker in dem Ankersatz mit einer interaktiven Audio-/Videozusammensetzung assoziiert ist, und jeder Anker umfassend eine Ankerkennungsvorrichtung (115), die eine Ankerkennung beinhaltet; und
einen Ankersensor (120), der zu Folgendem konfiguriert ist:
Erfassen der Ankerkennungsvorrichtung (115) eines Ankers (105);
Lesen der Ankerkennungsvorrichtung (115) des erfassten Ankers (105), um die eindeutige Ankerkennung von der erfassten Ankerkennungsvorrichtung zu erlangen; und
Übertragen der eindeutigen Ankerkennung; und
einen Mediaplayer (125), der zu Folgendem konfiguriert ist:
Empfangen der eindeutigen Ankerkennung von dem Ankersensor (120);
Identifizieren einer oder mehrerer Wiedergabelisten, die mit der eindeutigen Ankerkennung assoziiert sind, wobei die eine oder mehreren Wiedergabelisten Mediendateien umfassen und die interaktive Audio-/Videozusammensetzung bilden;
Erlangen der einen oder mehreren Wiedergabelisten; und
Wiedergeben der Mediendateien der einen oder mehreren Wiedergabelisten;
**DADURCH GEKENNZEICHNET, DASS** der Mediaplayer (125) konfiguriert ist, um die Mediendateien der einen oder mehreren Wiedergabelisten ferner basierend auf einem Zustands der wiedergegebenen interaktiven Audio-/Videozusammensetzung wiederzugeben, und wobei der Zustand der interaktiven Audio-/Videozusammensetzung von mindestens einem von Folgendem abhängt: der Anzahl, wie oft ein Anker aus dem Ankersatz erfasst wurde, den zuvor erfassten Ankern, den zuvor entfernten Ankern und anderen Ankern, die gleichzeitig mit dem erfassten Anker (105) erfasst werden.

2. Interaktives Mediensystem nach Anspruch 1, wobei die interaktive Audio-/Videozusammensetzung eine von Folgenden ist:
eine interaktive Geschichte, wobei jeder Anker in dem Ankersatz einen Charakter oder ein physisches Objekt in der interaktiven Geschichte darstellt; und
eine interaktive Musikzusammensetzung, wobei jeder Anker in dem Ankersatz ein Musikinstrument darstellt.

3. Interaktives Mediensystem nach Anspruch 1, wobei:
jede eindeutige Ankerkennung verschlüsselt ist und wobei der Mediaplayer ferner konfiguriert ist, um als Reaktion auf einen Empfang der eindeutigen Ankerkennung von dem Ankersensor die verschlüsselte eindeutige Ankerkennung entschlüsselt; und
jede Ankerkennung vorzugsweise mit einem einzelnen Schlüssel, einem öffentlichen Schlüssel oder einem privaten Schlüssel verschlüsselt ist.

4. Interaktives Mediensystem nach Anspruch 1, wobei:
jede eindeutige Ankerkennung eine vorbestimmte Zahl, vorzugsweise eine verschlüsselte vorbestimmte Zahl, und eine universell eindeutige Kennung (universally unique identifier, UUID) umfasst; und,
wenn die vorbestimmte Zahl um eine verschlüsselte vorbestimmte Zahl ist, der Mediaplayer ferner konfiguriert ist, um als Reaktion auf einen Empfang der eindeutigen Ankerkennung von dem Ankersensor die verschlüsselte vorbestimmte Zahl zu entschlüsseln und zu authentifizieren, und die eine oder die mehreren Wiedergabelisten, die mit der eindeutigen Ankerkennung assoziiert sind, unter Verwendung der UUID zu identifizieren.

5. Interaktives Mediensystem nach Anspruch 1, wobei jede Ankerkennungsvorrichtung ein eindeutiges Funkfrequenzkennungs-Tag ist, die eindeutige Ankerkennung eine eindeutige Funkfrequenzkennung ist und der Ankersensor konfiguriert ist, um das eindeutige Funkfrequenzkennungs-Tag unter Verwendung von Nahfeld-Funkkommunikation zu lesen, um die eindeutige Funkfrequenzkennung zu erlangen, wobei jedes Funkfrequenzkennungs-Tag vorzugsweise eine Audio-Wiedergabeliste speichert, die mit der eindeutigen Funkfrequenzkennung assoziiert ist.

6. Interaktives Mediensystem nach Anspruch 1, wobei die eindeutige Ankerkennungsvorrichtung ein optischer Code ist, der mit dem Anker assoziiert ist, und wobei der Ankersensor konfiguriert ist, um den optischen Code unter Verwendung optischer Kommunikation zu erfassen und zu erlangen, wobei der optische Code vorzugsweise ein Strichcode oder ein Quick Response Code (QR-Code) ist.

7. Interaktives Mediensystem nach Anspruch 1, ferner umfassend eine Mediaplayer-Vorrichtung, wobei der Ankersensor und die Mediaplayer in die Mediaplayer-Vorrichtung integriert sind, wobei die Mediaplayer-Vorrichtung vorzugsweise eine Speichervorrichtung beinhaltet.

8. Interaktives Mediensystem nach Anspruch 1, ferner umfassend eine Mediaplayer-Vorrichtung, wobei:
der Ankersensor physisch von dem Mediaplayer getrennt ist und über eine drahtlose oder eine drahtgebundene Verbindung mit dem Mediaplayer funktionsfähig verbunden ist; und
das interaktive Mediensystem vorzugsweise eine Speichervorrichtung umfasst;
der Mediaplayer ferner konfiguriert ist, um die eine oder die mehreren Wiedergabelisten, die mit der identifizierten Wiedergabeliste assoziiert sind, von der Speichervorrichtung zu erlangen;
die Speichervorrichtung eines von einer Netzwerkspeichervorrichtung und einer Cloudbasierten Speichervorrichtung ist.

9. Interaktives Mediensystem nach Anspruch 2, wobei die Wiedergabeliste eine Audiomediendatei ist und wobei während der Wiedergabe der Audiomedien durch den Mediaplayer ein Benutzer aufgefordert wird, einen anderen Anker aus dem Ankersatz auf oder in der Nähe des Mediaplayer-Systems zu platzieren.

10. Interaktives Mediensystem nach Anspruch 2, wobei:
einer der Anker in dem Ankersatz ein Geschichte-Start-Anker ist und wobei die eindeutige Ankerkennung für den Geschichte-Start-Anker mit einem Zustand für einen Beginn der interaktiven Geschichte verbunden ist; und
vorzugsweise einer der Anker in der Ankergruppe ein Geschichte-Ende-Anker ist, und wobei die eindeutige Ankerkennung für den Geschichte-Ende-Anker mit einem Zustand zum Beenden der interaktiven Geschichte assoziiert ist.

11. Interaktives Mediensystem nach Anspruch 1, wobei:
der Ankersensor ferner konfiguriert ist, um den Anker unter Verwendung eines drahtlosen Nahbereichssignals zu erfassen, eine Entfernung zwischen der Ankerkennungsvorrichtung und dem Ankersensor basierend auf der Signalstärke des drahtlosen Nahbereichssignals zu bestimmen und die Entfernung zu dem Mediaplayer anzugeben, und vorzugsweise der Mediaplayer die Wiedergabe der Mediendateien basierend auf der von dem Ankersensor empfangenen Entfernung zu steuern.

12. Interaktives Mediensystem nach Anspruch 11, wobei, wenn der Mediaplayer die eine oder mehrere Wiedergabelisten wiedergibt, und wenn der Mediaplayer die Wiedergabe der einen oder mehreren Wiedergabelisten basierend auf der von dem Ankersensor empfangenen Entfernung steuert, der Mediaplayer eine Einblendung durchführt, wenn die von dem Ankersensor empfangene Entfernung abnimmt, und eine Ausblendung durchführt, wenn die von dem Ankersensor empfangene Entfernung zunimmt.

## Revendications

1. Système multimédia interactif (100), comprenant :
un ensemble d'ancres (105), chaque ancre dans l'ensemble d'ancres étant associée à une composition audio/vidéo interactive, et chaque ancre comprenant un dispositif identificateur d'ancre (115) qui comprend un identificateur d'ancre ; et
un capteur d'ancre (120) configuré pour :
détecter le dispositif identificateur d'ancre (115) d'une ancre (105) ;
lire le dispositif identificateur d'ancre (115) de l'ancre détectée (105) pour obtenir l'identificateur d'ancre unique à partir du dispositif identificateur d'ancre détecté ; et
émettre l'identificateur d'ancre unique ; et
un lecteur multimédia (125) configuré pour :
recevoir l'identificateur d'ancre unique en provenance du capteur d'ancre (120) ;
identifier une ou plusieurs listes de lecture associées à l'identificateur d'ancre unique, la ou les listes de lecture comprenant des fichiers multimédias et formant la composition audio/vidéo interactive ;
obtenir la ou les listes de lecture ; et
lire les fichiers multimédias de la ou des listes de lecture ;
**CARACTÉRISÉ EN CE QUE**, le lecteur multimédia (125) est configuré pour lire les fichiers multimédias de la ou des listes de lecture en outre sur la base d'un état de la composition audio/vidéo interactive en cours de lecture, et ledit état de la composition audio/vidéo interactive dépendant au moins de l'un parmi : le nombre de fois où une ancre de l'ensemble d'ancres a été détectée, les ancres précédemment détectées, les ancres précédemment retirées et, d'autres ancres détectées simultanément avec l'ancre détectée (105).

2. Système multimédia interactif selon la revendication 1, ladite composition audio/vidéo interactive étant l'une de :
une histoire interactive, chaque ancre dans l'ensemble d'ancres représentant un personnage ou un objet physique dans l'histoire interactive ; et
une composition musicale interactive, chaque ancre de l'ensemble d'ancres représentant un instrument de musique.

3. Système multimédia interactif selon la revendication 1,
chaque identificateur d'ancre unique étant chiffré et ledit lecteur multimédia étant en outre configuré pour, en réponse à la réception de l'identificateur d'ancre unique en provenance du capteur d'ancre, déchiffrer l'identificateur d'ancre unique chiffré ; et
de préférence, chaque identificateur d'ancre étant chiffré avec une seule clé, une clé publique ou une clé privée.

4. Système multimédia interactif selon la revendication 1,
chaque identificateur d'ancre unique comprenant un numéro prédéfini, de préférence un numéro prédéfini chiffré, et un identificateur universellement unique (UUID) ; et,
lorsque le numéro prédéfini est un numéro prédéfini chiffré, ledit lecteur multimédia étant en outre configuré pour, en réponse à la réception de l'identificateur d'ancre unique du capteur d'ancre, déchiffrer et authentifier le numéro prédéfini chiffré, et identifier la ou les listes de lecture qui sont associées à l'identificateur d'ancre unique à l'aide de l'UUID.

5. Système multimédia interactif selon la revendication 1, chaque dispositif identificateur d'ancre étant une étiquette d'identificateur radiofréquence unique, ledit identificateur d'ancre unique étant un identificateur radiofréquence unique, et ledit capteur d'ancre étant configuré pour lire l'étiquette d'identificateur radiofréquence unique à l'aide d'une communication radio en champ proche pour obtenir l'identificateur radiofréquence unique, chaque étiquette d'identificateur radiofréquence stockant de préférence une liste de lecture audio qui est associée à l'identificateur radiofréquence unique.

6. Système multimédia interactif selon la revendication 1, ledit dispositif identificateur d'ancre unique étant un code optique associé à l'ancre et ledit capteur d'ancre étant configuré pour détecter et obtenir le code optique à l'aide d'une communication optique, le code optique étant de préférence l'un d'un code à barres et d'un code de réponse rapide (QR).

7. Système multimédia interactif selon la revendication 1, comprenant en outre un dispositif de lecteur multimédia, ledit capteur d'ancre et ledit lecteur multimédia étant intégrés dans le dispositif de lecteur multimédia, le dispositif de lecteur multimédia comprenant de préférence un dispositif de stockage.

8. Système multimédia interactif selon la revendication 1, comprenant en outre un dispositif de lecteur multimédia,
ledit capteur d'ancre étant physiquement séparé du dispositif de lecteur multimédia et connecté fonctionnellement au dispositif de lecteur multimédia à l'aide de l'une d'une connexion sans fil et d'une connexion filaire ; et
de préférence, le système multimédia interactif comprenant un dispositif de stockage ;
ledit lecteur multimédia étant en outre configuré pour obtenir la ou les listes de lecture associées à la liste de lecture identifiée à partir du dispositif de stockage ;
ledit dispositif de stockage étant l'un d'un dispositif de stockage en réseau et d'un dispositif de stockage en nuage.

9. Système multimédia interactif selon la revendication 2, ladite liste de lecture étant un fichier multimédia audio, et durant la lecture du multimédia audio par le lecteur multimédia, un utilisateur étant invité à placer une autre ancre parmi l'ensemble d'ancres sur le système de lecteur multimédia ou près de celui-ci.

10. Système multimédia interactif selon la revendication 2,
l'une des ancres dans l'ensemble d'ancres étant une ancre d'histoire de départ, et ledit identificateur d'ancre unique pour l'ancre d'histoire de départ étant associé à un état pour commencer l'histoire interactive ; et
de préférence, l'une des ancres dans l'ensemble d'ancres étant une ancre d'histoire finale et ledit identificateur d'ancre unique pour l'ancre d'histoire finale étant associé à un état pour terminer l'histoire interactive.

11. Système multimédia interactif selon la revendication 1,
ledit capteur d'ancre étant en outre configuré pour détecter l'ancre à l'aide d'un signal sans fil à courte portée, déterminer une distance entre le dispositif identificateur d'ancre et le capteur d'ancre sur la base de la force de signal du signal sans fil à courte portée, et pour fournir la distance au lecteur multimédia, et de préférence, ledit lecteur multimédia commandant la lecture des fichiers multimédias sur la base de la distance reçue en provenance du capteur d'ancre.

12. Système multimédia interactif selon la revendication 11, lorsque le lecteur multimédia lit la ou les listes de lecture et lorsque le lecteur multimédia commande la lecture de la ou des listes de lecture sur la base de la distance reçue en provenance du capteur d'ancre, ledit lecteur multimédia effectuant un fondu en entrée lorsque la distance reçue du capteur d'ancre diminue et effectuant un fondu en sortie lorsque la distance reçue en provenance du capteur d'ancre augmente.
